(19) Europäisches Patentamt
European Patent Office
Office européen des brevets

(11) Publication number: 0 065 412 A1

# (12) EUROPEAN PATENT APPLICATION

(21) Application number: 82302427.8

(22) Date of filing: 12.05.82

(51) Int. Cl.³: C 01 B 7/03, C 01 D 5/02, C 01 G 23/053

(30) Priority: 15.05.81 ZA 813257

(43) Date of publication of application: 24.11.82 Bulletin 82/47

(84) Designated Contracting States: AT BE CH DE FR GB IT LI NL SE

(71) Applicant: Hunter, James Beaumond, 54b Dunkeld Road, Westville Natal (ZA)

(72) Inventor: Hunter, James Beaumond, 54b Dunkeld Road, Westville Natal (ZA)

(74) Representative: Allam, Peter Clerk et al, LLOYD WISE, TREGEAR & CO. Norman House 105-109 Strand, London WC2R 0AE (GB)

## (54) Process for conversion of sulphuric acid waste (for example from titanium dioxide) into useful products.

(57) The invention relates to a process for treating effluents containing sulphuric acid, in which process the effluent is mixed with an alkali metal sulphate such as a sodium compound under conditions for the formation of the corresponding alkali metal bisulphate, the bisulphate is dried or crystallized and then reacted with an alkali metal halide such as chloride to form the corresponding hydrogen halide. The reaction utilised by the invention is as follows:

$$Na_2SO_4 + H_2SO_4 \longrightarrow 2\ NaHSO_4$$

EP 0 065 412 A1

TITLE: PROCESS FOR CONVERSION OF SULPHURIC ACID WASTE (FOR EXAMPLE FROM TITANIUM DIOXIDE) INTO USEFUL PRODUCTS

This invention relates to an improved process for the conversion of waste sulphuric acid, for example, from titanium dioxide plants, into useful products.

In the process for manufacture of titanium dioxide ($TiO_2$) by the so-called "sulphate process" there is one major disadvantage, namely, that very large quantities of dilute sulphuric acid, containing ferrous and titanyl sulphate as impurities, are produced as a by-product and must be disposed of. The high iron content and low concentration make this by-product acid un-attractive to most sulphuric acid users.

Disposing of the acid is a serious problem. Some $TiO_2$ producers neutralise the acid before pumping it away, which is very costly. Others pump the acid out to sea, which is undesirable from environmental considerations.

Another approach is to process the acid into a more useable form, for example by vacuum evaporation to recover concentrated sulphuric acid. The necessity for exotic materials of construction and the problem of fouling of heat exchangers due to the ferrous sulphate make this a very expensive process.

A further approach is to convert the acid into useable products. One possibility is to react the waste acid with common salt to produce sodium sulphate and

hydrochloric acid, i.e. the well-knov process. The overall reaction in thi given by:-

$$2NaCl + H_2SO_4 \longrightarrow Na_2SO_4 + 2HC$$

Sodium chloride + sulphuric acid sodium sulphate + hyd c

This reaction takes place in two steps

$$NaCl + H_2SO_4 \longrightarrow NaHSO_4 + HC$$

sodium bisulphate

and $$NaCl + NaHSO_4 \longrightarrow Na_2SO_4 + HC$$

The first reaction takes place at rel temperatures, i.e. of the order of 10 reaction requires higher temperatures 600°C. The process is normally carried concentrated sulphuric acid with salt a mixture, either in a special furnace (e furnace) or in a rotary kiln.

Carrying out the "salt cake" process for example from the $TiO_2$ process (he acid) poses a number of severe proble low (typically around 20% by mass) $H_2S$ means that when the TD acid is heated large quantity of water is evaporated

Thus the HCl gas formed in reaction (2) is considerably diluted by the simultaneous evaporation of steam. If the resulting vapour is condensed, a solution containing only about 10% HCl is recovered. This is not a saleable product, and must be concentrated up to the normal commercial 30% HCl. However, this cannot be done by conventional distillation, because the azeotrope, containing about 21% HCl, is the highest concentration achievable.

A second problem is that reaction (2) will be taking place in the liquid phase. Heating a liquid containing aqueous HCl requires exotic heat transfer materials such as tantalum or graphite. This makes a reactor for reaction (2) very expensive.

A third problem is that two separate reactors will be required, one for the liquid phase (reaction 2.) and one for the largely solid phase in reaction (3). This makes for a very expensive plant.

The object of the present invention is to provide a process for the conversion of waste sulphuric acid for example, from $TiO_2$ production (TD acid) into saleable products, namely sodium sulphate and hydrogen chloride. The iron values can be recovered as pigment grade iron oxide at the same time.

According to the invention a process of treating effluents containing sulphuric acid includes the steps of mixing the effluent with an alkali metal sulphate under conditions for the formation of the corresponding alkali metal bisulphate, drying the bisulphate and then reacting it with an alkali metal halide to form the corresponding hydrogen halide. The term "alkali metal bisulphate" is intended to include mixtures and/or compounds of the species $M_2S04$, $H_2SO_4$, $MHSO_4$, in which M is an alkali metal).

In the preferred form of the invention the sodium compounds are used and the halide is chloride.

If a high purity sodium sulphate is desired, the resulting sodium sulphate is dissolved in water, the pH is adjusted to about 6, and the precipitate of iron oxide is filtered off to yield a solution of sodium sulphate of high purity. The high purity solid sodium sulphate can be recovered by conventional, well-known evaporation and crystallisation means. If pigment grade iron oxide is required, it can be obtained by washing the filtered iron oxide and heating to drive off the moisture.

The reaction utilised by this invention is as follows:-

$$Na_2SO_4 + H_2SO_4 \longrightarrow 2NaHSO_4 \qquad (4)$$

Since reaction between $NaHSO_4$ and NaCl (reaction 3) only takes place at elevated temperatures, the resultant mixture of $NaHSO_4$ and NaCl can be heated to drive off the moisture without driving off any significant quantities of HCl. The dry mixture can then be heated in a single reactor to give off HCl without significant dilution by water. If pigment grade iron oxide is required, the heating should be done under oxidising conditions.

1. Anhydrous HCl can be produced, or commercial (30%) hydrochloric acid can be produced by direct absorption without further processing.

2. Only one reactor is required.

3. No exotic materials are needed for heating the mixture.

4. The pollution problems associated with waste TD acid are eliminated.

5. Saleable products (sodium sulphate, crude or detergent grade, anhydrous or 30% HCl, pigment grade iron oxide) can be produced.

The invention is described in more detail, but by way of example only, with reference to the drawing of a flow-sheet accompanying this specification.

Referring to the flowsheet (Figure 1), reference (1) designates the waste acid solution, which is mixed with recycled sodium sulphate (2) in a mixer (3) from where it is led into a drier or crystalliser (4). The resulting solid is mixed with salt (5) in a second mixer (6), and roasted in a roaster (7). After cooling in a cooler (8), a portion of the crude sodium sulphate is recycled to the first mixer, while the balance can be sold as such or further processed to purify it. Purification involves the addition of water (9) to dissolve it, and alkali (10) to raise the pH to around 6 to 7. This takes place in a dissolving tank (11) and the solution then passes to a filter (12) where iron oxide (13) is removed. The filtrate, a high purity sodium sulphate solution (14), can be evaporated and crystallised as it well known in the art, to produce detergent grade sodium sulphate.

The hot gas (15) from the roaster passes to a quencher/absorber column (16) where the HCl gas is absorbed to form commercial 30% HCl solution.

The iron oxide can be dried to produce pigment grade iron oxide.

The invention is further illustrated by the following examples:-

Example 1

50 g. of sodium sulphate was added to 100 ml, of TD acid (containing 237 g/l of $H_2SO_4$ and 13 g/l $FeSO_4$) and evaporated to dryness. 5,00 g of the solid product was mixed with 1,73 g of milled sodium chloride and heated at 600°C for 1½ hours under oxidising conditions (i.e. exposed to air.

The resulting product contained 3,7% $NaHSO_4$ and 0,1% NaCl. The product was dissolved in water, the pH adjusted to 6,5 and filtered. The resultant clear filtrate was evaporated to dryness and analysed. The dry product met the specification for detergent use, i.e. total heavy metal concentration was less than 5 ppm, and $Na_2SO_4$ content was higher than 99%.

Example 2

100 g of sodium sulphate was added to 100 ml of TD acid (containing 237 g/l of $H_2SO_4$) and evaporated to dryness. 5,00 g of the solid product was mixed with 1,03 g of milled sodium chloride and heated at 600°C for 1½ hours under oxidising conditions.

The resulting product contained 4,4% $NaHSO_4$ and 0,1% NaCl. The product was dissolved in water, the pH adjusted to 6,5 with sodium carbonate, and filtered. The resultant clear filtrate was evaporated to dryness as before, and the dry product conformed to the detergent grade sodium sulphate specification.

CLAIMS

1.

A process for treating effluents containing sulphuric acid including the steps of mixing the effluent with an alkali metal sulphate under conditions for the formation of the corresponding alkali metal bisulphate, drying or crystallising the bisulphate and then reacting it with an alkali metal halide to form the corresponding hydrogen halide.

2.

A process according to claim 1 in which the alkali metal sulphate comprises a sodium compound.

3.

A process according to claim 1 or claim 2 in which the metal halide is chloride.

4.

A process according to any one of claims 1 to 3 in which the resulting sodium sulphate is dissolved in water and

a metal oxide is removed after suitable adjustment to the pH of the solution.

5.

Any one or more of sodium sulphate, iron oxide or hydrochloric acid produced according to a process of any one of claims 1 to 4.

LLOYD WISE, TREGEAR & CO.
NORMAN HOUSE 105-109 STRAND
LONDON, WC2R 0AE

0065412

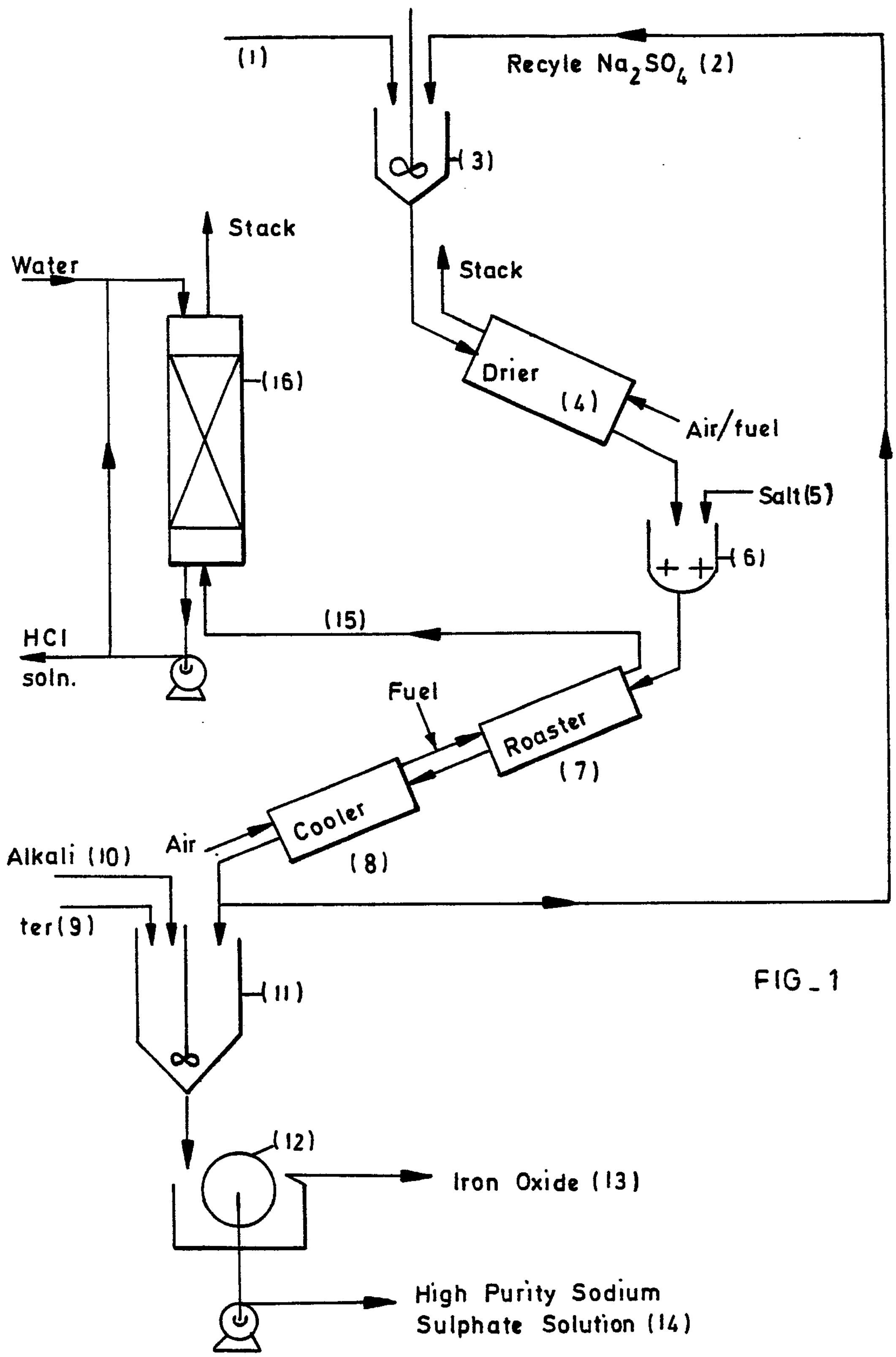


FIG_1

0065412

European Patent Office

# EUROPEAN SEARCH REPORT

Application number

EP 82 30 2427

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| Y | E.WIBERG: "Lehrbuch der Anorganischen Chemie", 57. - 70. Auflage, 1964, Walter de Gruyter & Co. pages 89-90, Berlin (DE); *Page 89, section 2 - page 90, line 8*<br>--- | 1-3,5 | C 01 B 7/03<br>C 01 D 5/02<br>C 01 G 23/053 |
| Y | DE-A-1 931 767 (SPOLANA)<br>*Claim 1; page 1, line 4 - page 2, line 10*<br>--- | 1-3,5-7 | |
| Y | DE-C- 457 897 (SCHUCH)<br>*Page 1, lines 1-31; page 2, lines 35-79*<br>--- | 1-3,5 | |
| Y | CHEMICAL ABSTRACTS, vol. 86, no. 18, 2nd May 1977, page 144, no. 123806a, Columbus Ohio (USA); V.K.BEIDIN: "Study of the production of sodium bisulfate during reaction of sodium sulfate and sulfuric acid". & TEZISY DOKL. VSES. NAUCHNO-TEKH. KONF. TEKHNOL. NEORG. VESHCHESTV MINER. UDOBR., 9th 1974, 1, 174-5. *The whole abstract*<br>--- | 1-3,5 | TECHNICAL FIELDS SEARCHED (Int. Cl. 3)<br>C 01 B 17/90<br>C 01 D 5/02<br>C 01 B 7/03<br>C 01 B 17/96<br>C 01 G 23/053 |
| Y | CHEMICAL ABSTRACTS, vol. 80, no. 4, 28th January 1974, page 142, no. 17025m, Columbus Ohio (USA); & JP - A - 73 14 317 (TEIKOKU KAKO CO., LTD.) (07-05-1973) *The whole abstract*<br>----- | 4 | |

The present search report has been drawn up for all claims

| Place of search | Date of completion of the search | Examiner |
|---|---|---|
| THE HAGUE | 08-07-1982 | GRUNDKE H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82